# EUROPEAN PATENT APPLICATION

(11) **EP 4 746 061 A1**
(43) Date of publication of application: **20.05.2026**
(21) Application number: 24213405.4
(22) Date of filing: 15.11.2024
(51) Int. Cl.: H01M 4/131, H01M 4/485, H01M 4/505, H01M 10/0525, H01M 10/0567, H01M 10/0568

(54) **Lithium-ion cell with high-voltage negative electrode and method for enhacing cell properties thereof**

(71) Applicant: Morrow Technologies AS, 4836 Arendal (NO)
(72) Inventor: PAIGE ALLEN, Jennifer, N-4879 Grimstad (NO); SVEEN HEMPEL, Frida, N-1068 Oslo (NO); NAVARRO SUÁREZ, Adriana Milena, N-4841 Arendal (NO); FOLD VON BÜLOW, Jon, N-4816 Kolbjørnsvik (NO); ANDERSEN, Siri, 4817 His (NO)
(74) Representative: Acapo Onsagers AS

(57) **Abstract**

The present invention relates to high-performance lithium-ion cells applying a high-voltage negative electrode having an added amount of a selection of cations, a method for enhancing performance metrics of a lithium-ion electrochemical cell applying a high-voltage negative electrode by adding said selection of cations to the cell, and use of said selection of cations as an additive to a lithium-ion electrochemical cell applying a high-voltage negative electrode, wherein the selection of cations consists of one or more cations of elements chosen from: i) the group of elements in groups 3 to 12 and periods 4 to 6, including the lanthanides of the IUPAC Periodic Table of the elements of 4^{th} May 2022, and/or ii) the group of; Al, Ga, In, Ge, Sn, Pb, Sb and Bi.

## Description

The present invention relates to high-performance lithium-ion cells applying a high-voltage negative electrode and a method for enhancing cell properties of a lithium-ion cell applying a high-voltage negative electrode, such as e.g. niobates, titanates, etc.

### Background

Rechargeable lithium ion-batteries are a vital energy technology for our modern society and a key component in transitioning to a more sustainable and resilient energy future.

At present, most lithium-ion batteries use graphite as the negative electrode material. Electrolyte design for graphite negative electrodes relies on protective film-forming electrolyte additives that are electrochemically reduced to form a solid-electrolyte interphase (SEI-layer) on the negative electrode surface. ¹ Forming a stable SEI-layer is important in lithium-ion batteries to prevent side reactions of the electrolyte and provide high cyclability, i.e. many charge-discharge cycles with little capacity loss.

The positive electrodes for present lithium-ion batteries are typically lithium iron phosphate (LFP) or various lithium transition metal oxides, such as e.g. lithium nickel manganese cobalt oxide (NMC), lithium nickel cobalt aluminium oxide (NCA), lithium nickel cobalt manganese aluminium oxide (NCMA), lithium manganese oxide (LMO), lithium nickel manganese oxide (LNMO) and lithium cobalt oxide (LCO).

These positive electrode materials are shown to suffer from dissolution of the transition metals into the electrolyte solution, which migrate to the negative electrode and deposit there.² It is a well-established fact in this field that deposition of transition metals on low-voltage negative electrodes (e.g., graphite, mesocarbon microbead, silicon) is deleterious to cell performance.^{2, 3, 4}

Higher-voltage negative electrode active materials such as lithium titanate (LTO) and niobium oxide have recently attracted increased attention, owing to offering enhanced cycle life, safety, and fast-charging capabilities⁵ as compared to the low-voltage negative electrode materials described above.

The design of nonaqueous electrolyte solutions for high-voltage negative electrodes is typically different from the design of electrolytes for low-voltage negative electrodes.¹

It is known to be challenging to develop suitable electrolyte additives to improve the performance of high-voltage negative electrodes, because the high voltage of the electrode is often higher than the reduction potential for most electrolyte components. This prevents reduction of electrolyte components onto the electrode surface, thus hampering the formation of a passivating SEI-layer. For example, where ethylene carbonate may be reduced at graphite to form a lithium ethylene dicarbonate-based SEI-layer, the operating voltage of high voltage anodes such as LTO is too high for this reaction to occur.

There is thus a need for formation of a robust, protective SEI -layer on the active material of high-voltage negative electrodes.

### Prior art

Previous descriptions of the addition of small amounts of carefully selected organic or fluorinated compounds to the electrolyte of a Li-ion battery are numerous. However, previous descriptions of the addition of one or more transition metal cations to enhance Li-ion battery cell properties are scarce for both low- and high-voltage negative electrodes as this strategy often leads to diminished cell properties and is thus rarely employed.

From Zheng et al. (2006) ⁶ it is known that the electrochemical performance of a natural graphite anode was successfully enhanced by the addition of three different potassium salts into ethylene carbonate-diethyl carbonate electrolyte. The presence of potassium salts in the electrolyte prior to the charge-discharge cycle considerably reduced the irreversible capacity loss at the first cycle. The reversible capacity and rate capability of the graphite anode were also improved.

Komaba et al. (2005) ⁷ dicloses that electrochemical performance of a graphite electrode for lithium-ion batteries are easily improved by sodium ion dissolved in an electrolyte solution.

Wu et al. (2004) ⁸ found that addition of silver hexafluorophosphate to propylene carbonate (PC)-based electrolyte may suppress the co-intercalation and decomposition of PC in mesocarbon microbeads (MCMB).

Wu et al. (2004) ⁹ discloses that addition of copper trifluoromethanesulphonate (CuTF) to propylene carbonate (PC)-based electrolyte effectively suppresses the cointercalation and decomposition of PC in the MCMB electrodes during the first lithiation process.

Furthermore, experiments where manganese (II), nickel (II), and cobalt (II) salts are added to lithium-ion cells with low-voltage negative electrodes have shown these ions lead to capacity fade¹⁰ by catalytically reacting with the electrolyte solution and, in the case of manganese (II), additionally decomposing the existing SEI.¹¹ This ultimately leads to a thickened, resistive SEI film containing trapped cyclable lithium - as much as 95 trapped lithium ions per Mn(II) ion¹² - resulting in the observed capacity loss.

US 2018/0269528 A1 discloses a lithium ion battery comprising at least one cathode, at least one anode comprising LTO having an optional surface coating, and an electrolyte composition, where the electrolyte composition comprises an organic solvent, one or more lithium salts, one or more SEI forming additives selected from the group consisting of a) alkali metal salts of borates, b) organoboron compounds, c) imides, d) sulfates and e) sulfites; and one or more moisture removing additives selected from the group consisting of f) anhydrides g) nitriles, h) tertiary amines, and i) amides.

From US 11,302,916 B2, it is disclosed pre-treating an electrolyte by contacting it with an oxide species (e.g., SiO₂, SiOₓ, where 1 ≤ x ≤ 2, TiO₂). The electrolyte comprises LiPF₆ and a carbonate solvent. A reaction occurs to form a pretreated electrolyte comprising a compound selected from the group consisting of: MₐP_{x'}O_{y}F_{z}, MₐP_{x'}O_{y}F_{z}CₙHₘ, and combinations thereof, where when P in the formula is normalized to 1 so that x' is equal to about 1, 0 < y ≤ 4, 0 < z ≤ 6, 0 ≤ a ≤ 3, 0 ≤ n ≤ 20, 0 ≤ m ≤ 42, and M is selected from Li, Na, K, Mg, Ca, B, Ti, Al, and combinations thereof. Lithium-ion electrochemical cells including lithium titanate oxide (LTO) using such a pretreated electrolyte have reduced reactivity and gas formation.

However, little is known about the action of transition metal ions towards high-voltage negative electrode materials. It has been shown that dissolved manganese deposits on LTO electrodes ^{3, 13} but this deposition does not appear to cause harm to cell performance.³ Studies of LTO have suggested that the layer formed on the LTO surface is different than the layer formed on the graphite surface,¹⁴ and the chemical environment of deposited manganese is different on the two negative electrode materials.^{3, 13} It has also been observed that Mn deposition does not appear to determine SEI composition on LTO.¹³

### Objective of the invention

The objective of the invention is to provide a high-performance lithium-ion electrochemical cell/battery having a high-voltage negative electrode.

A further objective of the invention is to provide a method for enhancing one or more performance metrics of a lithium-ion electrochemical cell/battery having a high-voltage negative electrode.

### Description of the invention

The objectives of the invention are obtained by the appended patent claims.

The invention may be considered being a reduction to practice of a surprising discovery made by the inventors that the known detrimental effects^{3, 10, 11, 12} on the electrochemical properties of lithium-ion type electrochemical cells applying low-voltage negative electrodes due to transition metal ions being absorbed by or deposited onto the surface of said electrode, may actually be beneficial for lithium-ion electrochemical cells applying a high-voltage negative electrodes (hereinafter termed by the acronym HV-NE) by enhancing one or more performance metrics of the cell, including less gas generated inside the battery and electrochemical properties such as e.g. longer cycle life, longer calendar life for the battery, less loss of active lithium at the negative electrode and improved kinetics at the negative electrode e.g. such as lower CV share in CCCV cycling, less polarisation, etc.

Thus, in a first aspect, the invention relates to a lithium-ion electrochemical cell having a high-voltage negative electrode as defined in claim 1 with subclaims.

In a second aspect, the invention relates to a method for enhancing one or more performance metrics of a lithium-ion electrochemical cell (LIB) as defined in main claim 14 with subclaims.

In a third aspect, the invention relates to use of one or more cation(s) of elements chosen from the transition metals, the lanthanides, and/or the post transition metals as an additive to a LIB applying a HV-NE.

As mentioned above, commercially available LIBs up to date have mainly applied a negative electrode using graphite and/or silicon as its active material. The average potential of graphite versus Li/Li⁺ is approx. 0.1 V, while the average potential of silicon versus Li/Li⁺ is approx. 0.4 V ¹⁵. These negative electrode materials are also among the materials which are reported to be negatively affected by the leakage of manganese (II) and/or nickel (II) and/or cobalt (II)^{3, 4, 10} cations from the positive electrode. Thus, as used herein, the term "low-voltage negative electrode" means any negative electrode which the active material has an average potential versus Li/Li⁺ of less than 0.5 V.

The term "high-voltage negative electrode (HV-NE)" as used herein encompasses any electrode having an active material with an average potential versus Li/Li⁺ above the average potential for graphite and/or silicon versus Li/Li⁺.

In one embodiment, the HV-NE have an active material with an average potential versus Li/Li⁺ of 0.5 V or higher.

In one embodiment, the HV-NE have an active material with an average potential versus Li/Li⁺ in the range from 0.5 to 3.0 V, or from 0.6 to 2.8 V, or from 0.7 to 2.6 V, or from 0.8 to 2.4 V, or from 0.9 to 2.3 V, or from 1.0 to 2.2 V, or from 1.1 to 2.1 V, or from 1.2 to 2.0 V, or from 1.3 to 1.9 V, and or from 1.4 to 1.8 V, or from 1.5 to 1.7 V.

A person skilled in the art is familiar with the electrochemical parameter "average potential versus a reference potential" of an electrode. However, one example of how to determine the average potential of a HV-NE vs Li/Li⁺ applied herein may for example be determined by applying a HV-NE in a half-cell configuration having a reference electrode of lithium metal, an electrolyte of 1 M LiPF₆ in organic carbonate solvents, and said HV-NE as the working electrode, and performing a complete lithiation from 0 to 100 % of the HV-NE at a C-rate of C/10 (i.e., constant current corresponding to 10-hour lithiation process) while measuring a series of cell potential values taken at least at every 2 minutes during the entire said lithiation of the HV-NE, and then setting the average potential of the HV-NE to be the arithmetic average of the series of measured cell potentials.

Examples of active materials suited for use in high-voltage negative electrodes comprise e.g. lithium titanium oxides (lithium titanates), niobium oxides (niobates), niobium tungsten oxides, titanium oxides, other transition metal oxides (such as manganese, nickel, iron, zinc), and/or transition metal phosphides, such as e.g. Li₄Ti₅O₁₂ (average potential vs. Li/Li⁺ of 1.55 V), Nb₂O₅ (average potential of approx. 1.5 V), Nb₁₆W₅O₅₅ (average potential of 1.57 V), Nb₁₈W₁₆O₉₃ (average potential of 1.67 V), FeP (average potential of approx. 1.0 V), TiO₂ bronze polymorph (average potential of approx. 1.6 V), Cu₂Nb₃₄O₈₇ (average potential of 1.67 V), AlNb₁₁O₂₉ (average potential of 1.57 V) TiNb₂O₇, VNb₉O₂₅, MnO, NiO, Fe₃O₄, ZnMn₂O₄, ZnFe₂O₄, CoMoO₄, Li₃Ti₄Co_{0.95}CrO₁₂, Zn₂Ti₃O₈₋ₓ, Na₂Li₂Ti₆O₁₄, Cu_{0.02}Ti_{0.94}Nb_{2.04}O₇, Li₃VO₄.

As shown in the "verification of the invention" section below, said enhanced electrochemical properties are observed in a series of comparison tests comparing cell performance between two identical electrochemical cells applying the same positive electrode and high-voltage negative electrode (HV-NE), and where one electrochemical cell was added an amount of one or more compound(s) which formed and increased the cells content of one or more cations of elements chosen from the transition- or post transition metallic elements in the periodic table, while the other electrochemical cell was a reference cell which was not added with said amount of one or more compound(s). These comparison tests included addition of compounds which formed one of the following cations: Ag⁺, Co²⁺, Cu²⁺, Mn²⁺, Ni²⁺, Sc³⁺, Sn²⁺, and Zn²⁺ in the cell.

Thus, since these cations span over the full breadth of the transition- and post transition elements, the inventors believe these comparison tests have made it plausible that one or more of these enhanced electrochemical properties of the cell will be present in some degree when a LIB applying a HV-NE is added an amount of one or more of said cations. However, the elements in these groups belonging to the 7^{th} period in the periodic table are radioactive and many have very short halflives making these heavy metals less suited for use in battery electrodes.

Thus, in summary, the invention encompasses addition of a selection of one or more cations, where each cation of the selection is a cation of an element chosen from groups 3 to 12 and periods 4 to 6 including the lanthanides, and/or a cation of a metallic element belonging to groups 13 to 15 and periods 4 to 6 of the IUPAC Periodic Table of the elements of 4^{th} May 2022. The metallic elements in groups 13 to 15 and periods 4 to 6 in the IUPAC Periodic Table of the elements of 4th May 2022, are: Al, Ga, In, Ge, Sn, Pb, Sb and Bi.

In one embodiment, each of the one or more cation(s) of the selection is an ion of an element chosen from:
- a group of elements consisting of: Au, Ag, Al, Bi, Co, Cr, Cu, Fe, Ga, In, Mn, Mo, Nb, Ni, Pd, Pt, Sn, Ti, V, W, and Zn, or
- a group of elements consisting of: Au, Ag, Al, Bi, Co, Cr, Cu, Fe, Ga, In, Mn, Ni, Pd, Pt, Sn, and Zn.

In embodiment, each of the one or more cation(s) of the selection is preferably an ion of an element chosen from:
- a group of elements consisting of: Ag, Co, Cu, Mn, Ni, Sn, and Zn, or
- a group of elements consisting of: Cu, Mn, Ni, Sn, and Zn, or
- a group of elements consisting of: Cu, Sn, Ni, and Zn.

In one especially preferred embodiment, the selection is a cation of Cu and/or Sn.

In one especially preferred embodiment, the selection is a cation of Ni and/or Zn.

In one especially preferred embodiment, the selection is either a cation of Cu, or of Sn, or of Ni, or of Zn.

Tests performed by the inventors indicate that it is the presence of said selection of cations in the HV-NE, and thus the exposure of the HV-NE to these cation(s), which provides the observed beneficial cell-performance effects. The presence of this selection of cation(s) in the electrolyte and/or the positive electrode gave no indications that it significantly changed the performance of the LIB.

Furthermore, these tests also indicate that it is not necessary to add said selection to the HV-NE, as said observed enhanced performance metrics were obtained regardless of whether the addition was made to the HV-NE, and/or the electrolyte, and/or the positive electrode, and furthermore regardless of whether the addition of said selection of cation(s) was made by adding the cation(s) in the form of an inorganic compound of the cation, and/or an organic compound of the cation, and/or as a solution containing the cation.

Thus, in one embodiment, the addition of said selection of cation(s) to the LIB, may be obtained by adding each cation in the selection of one or more cation(s) to the HV-NE, and/or the electrolyte, and/or the positive electrode, and wherein each of the cation(s) in the selection is added in the form of an inorganic compound of the cation, and/or an organic compound of the cation, and/or as a solution containing the cation.

In one embodiment, the addition of said selection of one or more of cation(s) to the LIB, may advantageously be added to the LIB before the LIB undergoes its first charging/discharging cycle.

Without being bound by theory, it is believed that said added compound(s) will react inside the cell and release cations of said elements to the chemical environment within the LIB, and further that at least a part of said released cation(s) will migrate to the HV-NE and cause one or more of the observed beneficial effects on the cell performance.

According to one embodiment, compounds at which each cation in the selection of one or more cation(s) is in the form of and added to the LIB is one or more compounds selected from the group consisting of:
a bis(trifluoromethanesulphonyl)imide (TFSI), a bis(fluorosulfonyl)imide (FSI), a trifluoromethanesulfonate (OTf), a bis(oxalato)borate (BOB), a perchlorate (ClO₄),
a tetrafluoroborate (BF₄), a hexafluorophosphate (PF₆), and a Tetrakis(3,5-bis(trifluoromethyl)phenyl)borate (TFPB).

Tests performed by the inventors indicate further that the observed beneficial effect on the cell performance is obtained from even small added amounts of said cation(s). Thus, even though it will be advantageous to add the selection of cation(s) in the form of compounds which will more or less dissolve completely inside the cell and frees/leaches almost or all of their content of said elements as dissolved cations in the cell's chemical environment, this is not essential or mandatory to obtain the effect of the claimed invention. Use of compounds which only partly dissociates and thus frees/leaches only a part of their content of said elements as dissolved cations in the cell's chemical environment is also believed to provide an acceptable effect on the cell performance.

Thus, without being bound by theory, it is believed that the observed effect on the cell performance, which for some embodiments may take several cycles to emerge and for other embodiments may be present at first cycle, is that due to the time needed for the added compounds to dissociate and enable the released cations to dissociate to and interact with the active material and/or the SEI-layer. However, since the amount of free electrolyte in a LIB may vary with number of cycles, and the dissolution degree of the additives may vary with temperature, number of cycles etc. it is chosen to herein express the total amount of cations of the selection of chosen cation(s) added to the LIB as as a concentration of added cations in a homogenized electrolyte, when all of the added cations are present in and 100 % solved in the electrolyte based on the amount of electrolyte present in the LIB before it undergoes a first charging/discharging cycle. I.e., if the addition of cations involves adding one or more compound(s) of said elements to the LIB, the concentration is to be determined as if all added compound(s) dissociates 100 % and release their entire content of said elements as cations to the electrolyte regardless of these compound(s) actual solubility. This definition of determining added amount of cations provides for an unequivocal and generally applicable reference for determining the amount of addition which enables the skilled person to unambiguously carry out the invention. The definition is considered clear and intelligible by the skilled person because it defines the added amount of cations as a mass ratio (expressed as a molar concentration) including 100 % of said elements added to the LIB relative to the mass of the original content of electrolyte in the LIB. By way of well-known routine methods, the skilled person can measure the amount of an element in a sample and apply this measurement to calculate the total amount of that element as a concentration in a known amount (the originally added amount to the cell) of electrolyte.

This shall however not be interpreted in a limiting way. The present invention encompasses any LIB having a HV-NE and which is added an amount of one or more cations selected from said elements, regardless of how the amount (mass) of added cations is determined.

In one embodiment, the total amount of cations of the selection of chosen cation(s) added to the LIB, expressed as a concentration of added cations in a homogenized electrolyte based on the amount of electrolyte present in the LIB before the LIB undergoes a first charging/discharging cycle, when it is assumed that all of said addition is present in the electrolyte, and all of said addition is solved 100 % in the electrolyte, is in the range from 1 to 200 millimoles per L electrolyte, or from 2 to 175 millimoles per L electrolyte, or from 3 to 150 millimoles per L electrolyte, or from 5 to 125 millimoles per L electrolyte, or from 6 to 100 millimoles per L electrolyte, or from 7 to 130 millimoles per L electrolyte, or from 8 to 90 millimoles per L electrolyte, or from 9 to 80 millimoles per L electrolyte, or from 10 to 70 millimoles per L electrolyte, or from 11 to 60 millimoles per L electrolyte, or from 12 to 50 millimoles per L electrolyte, or from 15 to 40 millimoles per L electrolyte, or from 20 to 30 millimoles per L electrolyte.

The invention may employ any known active material suited for in the positive electrode in LIB s applying a HV-NE. Examples of suited active materials for the positive electrode include, but is not limited to lithium transition metal oxides and lithium phosphates, stoichiometric or lithium-rich LiMn₂O₄, LiNiₓMn₂₋ₓO₄, LiCoO₂, LiNiO₂, LiNiₓMn_{y}Co_{1-x-y}O₂, LiNiₓCo_{y}Al_{1-x-y}O₂, LiFePO₄, and LiMnₓFe₁₋ₓPO₄.

Likewise, the invention may employ any known or conceivable electrolyte suitable for lithium-ion electrochemical cells applying a high-voltage negative electrode, examples of suited electrolytes comprise:
- an organic solvent chosen from an organic electrolyte solvent being one or more of carbonates, ethers, esters, lactones, sulfones, sulfonates, nitriles, phosphates, ionic liquids, formates, amides, imides, sulfoxides, ketones, and amines, or
- one or more of ethylene carbonate, propylene carbonate, fluoroethylene carbonate, difluoroethylene carbonate, diethyl carbonate, ethyl methyl carbonate, and/or dimethyl carbonate, any combination of diethyl carbonate, and dimethyl carbonate, lithium hexafluorophosphate (LiPF₆), lithium tetrafluoroborate (LiBF₄), lithium bis(oxalato)borate (LiBOB), lithium difluoro(oxalato)borate (LiDFOB), lithium perchlorate (LiClO₄), lithium bis(fluorosulfonyl)imide (LiFSI), lithium difluorophosphate (LiPO₂F₂), lithium trifluoromethanesulfonate (LiOTf) and lithium bis(trifluoromethanesulfonyl)imide (LiTFSI).

Furthermore, even though the claimed invention is described herein in the embodiment of a single LIB , this should not be interpreted as a limitation. The present invention encompasses both single electrochemical cells and any known and conceivable assembly of electrically interconnected LIB s including for example modules, battery packs, etc.

The present invention relates to adding certain cations, defined above, to LIBs having a HV-NE which are observed to enhance the cell performance. There may be minor contents of inherent cations from transition elements in prior art LIBs, being leached from the either the negative and/or the positive electrode etc. Furthermore, it is also known using mixed oxides including transition metals as the active materials, to dope the active materials with transition metals, and/or coat the surface of the active materials with coatings containing transition metals. The presence of such transition metals in a LIB should not be confused with the additions of the present invention because the addition of transition metal ions according to the invention are added to the electrolyte or to the cell components (electrodes, separator) without any high-temperature sintering required, while the transition metals in the mixed oxide, coating or doping of the active materials are made inherent in the active material by heat-treatments of several hundred degrees C causing the elements to chemically bond and be integrated with the molecular structure of the active materials. The added cation(s) of the present invention comes in addition to an eventual content of such inherent cations and is/are not subject to such heat-treatments or other processing to be integrated into the molecular structure of the active materials. Furthermore, the tests made by the inventors indicate that the cations being added are primarily interacting with electrolyte components to form an SEI-layer on the electrode surface, and not reacting directly with the HV-NE active material's crystal structure.

### Definition of terms

The term "electrochemical cell" is a generic term generally understood by the skilled person to encompass both galvanic cells and electrolytic cells. A galvanic cell is any device which can utilise the free energy of a chemical redox-reaction to produce electrical energy when the redox-reaction proceeds in its spontaneous direction. An electrolytic cell is any device which can utilise an external source of electric power to convert electric energy to (chemical) free energy by making a redox-reaction proceed in its non-spontaneous endothermic direction.

In the context of rechargeable batteries, the term "electrochemical cell" is commonly used in a somewhat narrower meaning by implicitly assuming that the electrochemical cell applies a reversible redox-reaction both to generate electric energy and to store electric energy by alternatingly allowing said chemical redox-reaction to proceed in its spontaneous direction and applying an external source of electric energy to reverse the direction of said reversible chemical redox-reaction to proceed in the opposite direction of its spontaneous direction.

Furthermore, the present invention relates to a sub-class of electrochemical cells commonly referred to as lithium-ion batteries. The term "battery" is commonly used as referring to either a single electrochemical cell or to an assembly of a plurality of electrically interconnected electrochemical cells packed together in modules, battery packs, etc. It is usually clear from the context whether the term "battery" refers to single or an assembly of cells.

Thus, as used herein, the term "lithium-ion electrochemical cell" encompasses any device which can produce electric energy by running a reversible chemical redox-reaction in its spontaneous direction converting relatively high-energy reactants into relatively low energy reaction products, but which can restore the device's capability to deliver electric energy by utilising external electric power to run the cell's redox-reactions in the opposite direction and thus converting the relatively low energy products formed in the above phase back to the high-energy reactants, and wherein the cell's redox-reactions involve exchange of lithium ions between an active material of the positive electrode and an active material of the negative electrode of the LIB .

An acronym commonly applied in the literature referring to a lithium-ion battery is "LIB". The same acronym will be used herein referring to a single lithium-ion electrochemical cell as defined above, but the acronym "LIB" may also be used herein referring to an assembly of a plurality of electrically interconnected electrochemical cells (battery cells) packed together in modules, battery packs, etc. if specified to be so.

Furthermore, a lithium-ion electrochemical cell or an assembly of lithium-ion electrochemical cells when given the above interpretation becomes technically identical to a "rechargeable lithium-ion battery". A rechargeable lithium-ion battery may also be termed as a "secondary lithium-ion battery" or as a "lithium-ion storage battery" in the literature. Thus, the terms "lithium-ion electrochemical cell", "rechargeable lithium-ion battery", "secondary lithium-ion battery", and "lithium-ion storage battery" may thus be used interchangeably herein and given a meaning as defined for said lithium-ion electrochemical cell above.

The electrodes of a battery are commonly termed as negative and positive but also as the anode and the cathode. The anode is defined as the positively charged electrode at which the oxidising half-reaction side of the cell's redox-reactions are occurring when the reactions proceed in their spontaneous direction and produces free electrons which can be delivered from the cell to an external circuit.

Similarly, the cathode is defined to be the negatively charged electrode at which the reducing half-reaction side cell's redox-reactions are occurring when the reactions proceed in their spontaneous direction and absorbs free electrons delivered to the cathode from the external circuit.

However, some definitions define the anode and cathode of a rechargeable cell according to which phase of a charge/discharge cycle the rechargeable battery is in. That is, the anode during discharging phase changes to be the cell's cathode when the battery is being charged, and the cathode during discharging changes to be the cell's anode when the battery is charged. This may cause confusion. The electrodes will therefore be termed herein as the "negative electrode" and the "positive electrode", respectively, where the negative electrode is the of the two electrodes of the electrochemical cell having the lowest potential relative to a standard hydrogen electrode and the positive electrode is the of the two electrodes of the electrochemical cell having the highest potential relative to a standard hydrogen electrode. These definitions make the negative electrode remaining the cell's negative electrode independently of the electrochemical cell's charging and discharging phases and will thus be the cell's negative electrode during all stages of a charging/discharging cycle. The same applies correspondingly for the positive electrode.

Furthermore, the term "active material" is generally understood by a person skilled in the art to either being a material in the positive electrode which acts as the recipient and storage of Li-ions delivered from the electrolyte during discharge and as supply of Li-ions being released to the electrolyte during charging, and/or being a material in the negative electrode which acts as a supply of Li-ions being released to the electrolyte during discharge and recipient and storage of Li-ions from electrolyte during charging of the cell. The active material may be made of a single chemical compound or a plurality of chemical compounds, a single alloy or a plurality of alloys, a single composite or a plurality of composites, etc.

The terms "transition metal" and "transitional element" as used herein are used interchangeably herein and encompasses any element belonging to groups 3 to 15 and period 4 to 6, including the lanthanides of the IUPAC Periodic Table of the elements of 4th May 2022.

Likewise, the term "post-transitional metal" or "post-transitional element" are used interchangeably herein, and both refer to any metallic element belonging to groups 13 to 15 and periods 4 to 6 in the IUPAC Periodic Table of the elements, i.e. elements Al, Ga, In and Tl in group 13, Ge, Sn, Pb in group 14, and Sb and Bi in group 15 of the IUPAC Periodic Table of the elements of 4th May 2022.

### Brief Description of Drawings

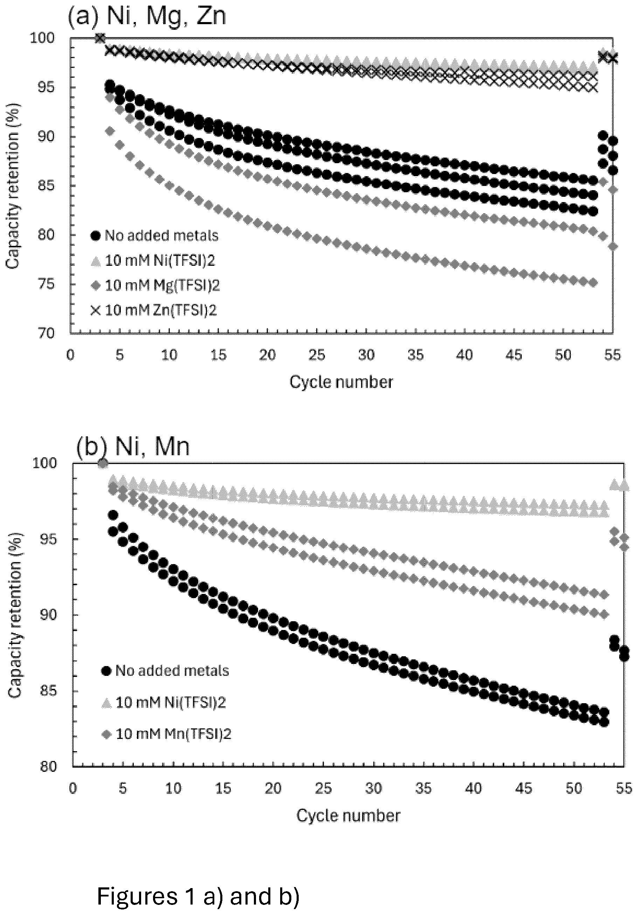

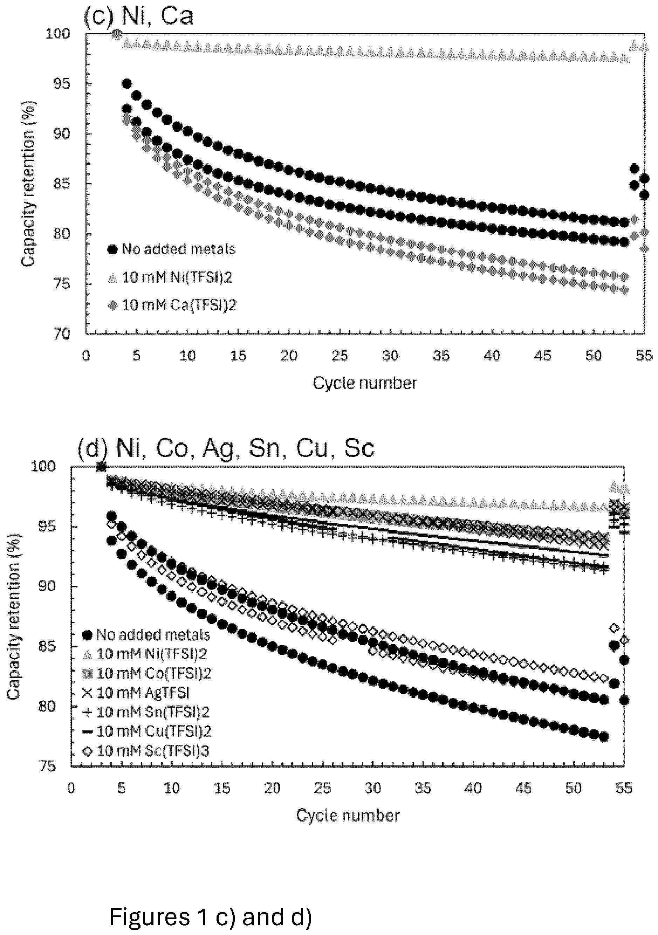

Figs. 1 a) to d) are diagrams showing capacity retention of LNMO-MNO 3-electrode cells in identical PAT-format lithium-ion cells. The electrolyte solution either had no added metals or contained either 10 mM Ni(II), Mg(II), Zn(II), Mn(II), Co(II), Ag(I), Cu(II), Sn(II), Sc(III), or Ca(II) TFSI.

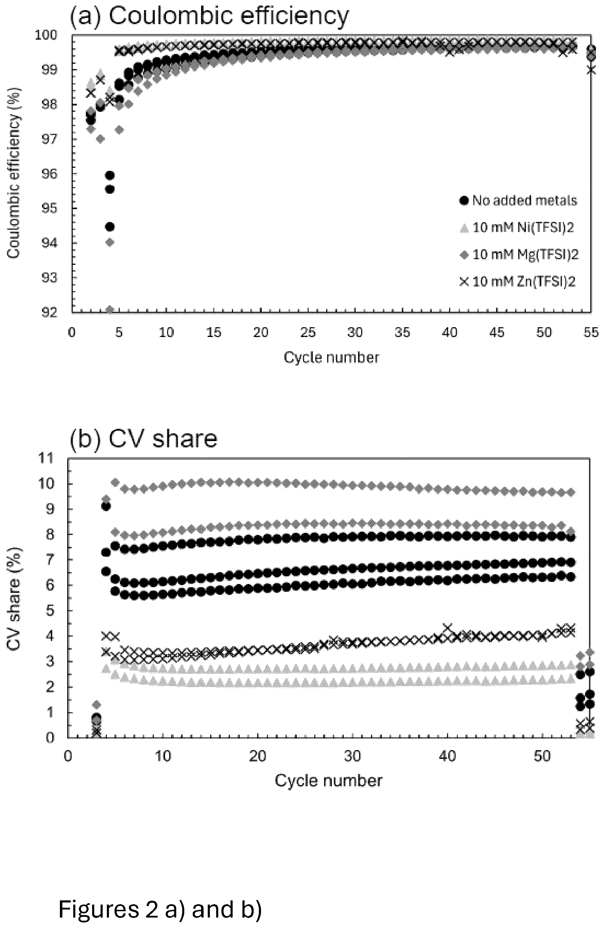

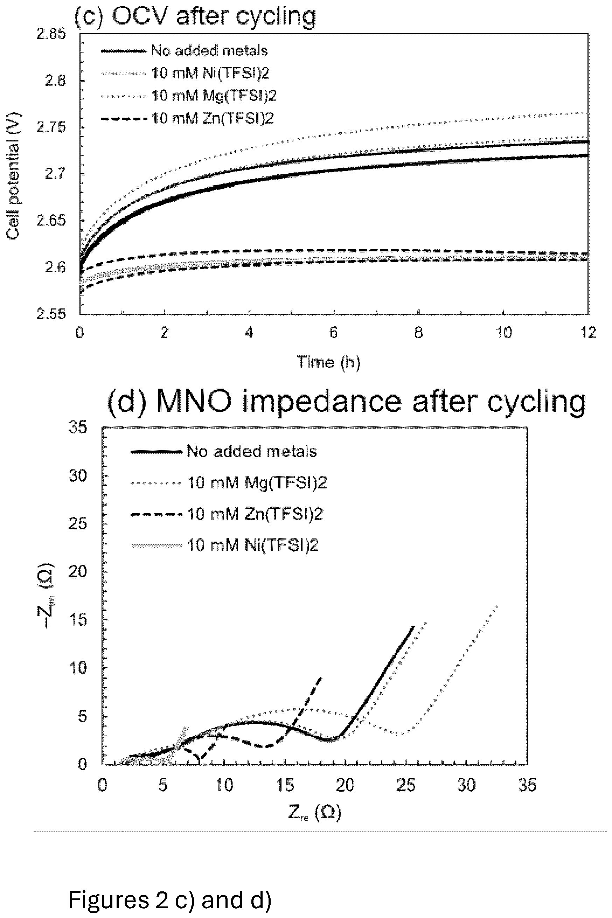

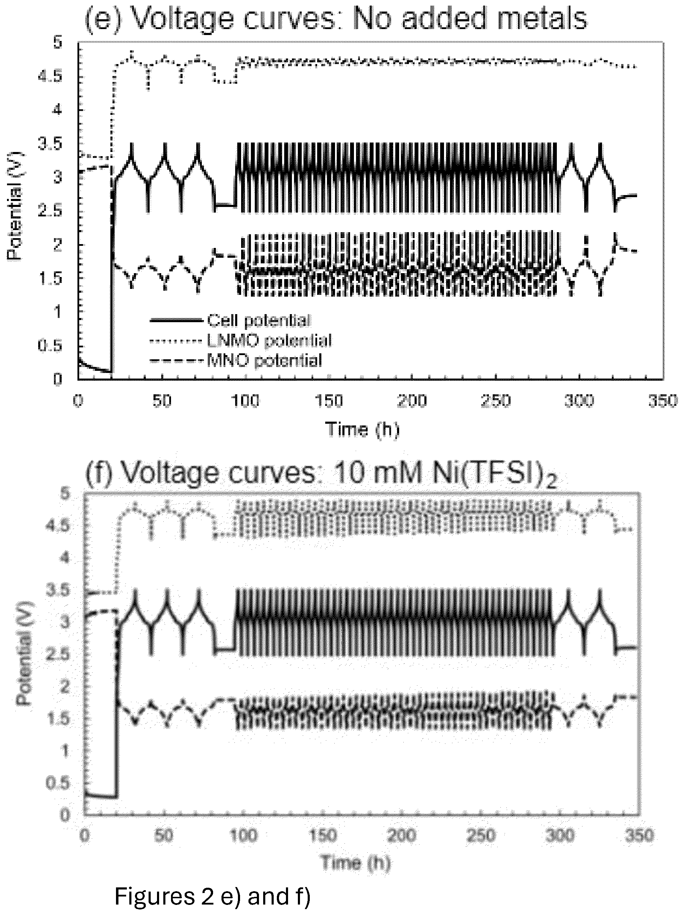

Figs. 2 a) to f) are diagrams showing additional performance metrics for LNMO-MNO 3-electrode PAT-format lithium-ion cells; electrolyte solution either has no added metals or contains 10 mM Ni(II), Mg(II), or Zn(II) TFSI. Panels show a) coulombic efficiency (note cycles 1 and 54 are off-scale), b) capacity share from constant voltage (CV) cycling step, c) cell open circuit voltage (OCV) after cycling, d) impedance at MNO after cycling, and e-f) voltage curves (MNO, LNMO, full cell) for cells with and without Ni(II).

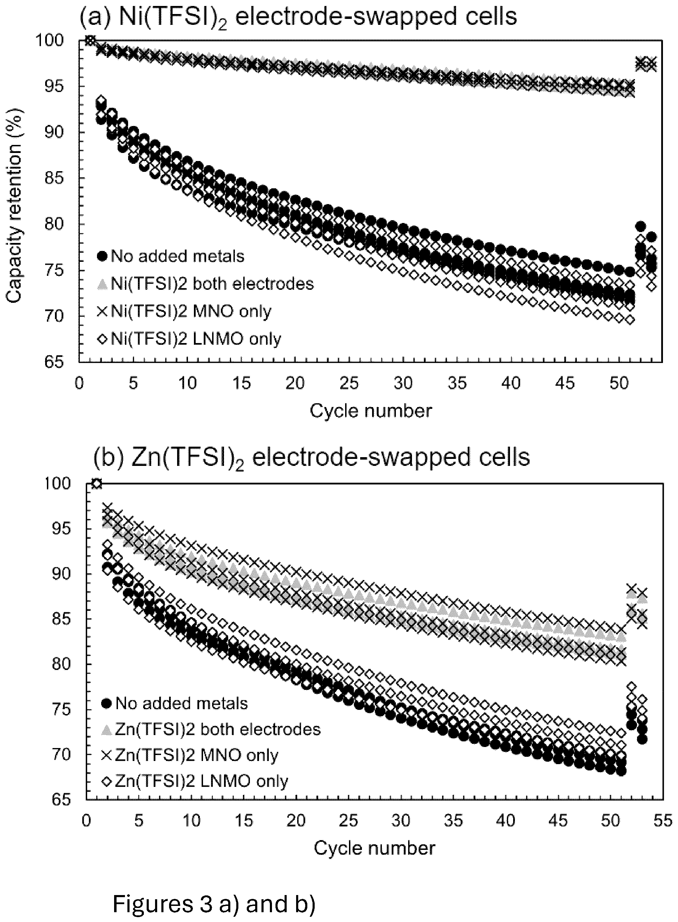

Figs. 3 a) and b) are diagrams showing capacity retention of LNMO-MNO 3-electrode PAT-format lithium-ion cells. Cells underwent formation cycles with electrolyte containing either no added metals or containing 10 mM Ni(II) or Zn(II) TFSI. Electrodes were rinsed and rebuilt into new cells where either MNO-only, LNMO-only, both electrodes, or neither electrode had been exposed to the metal salt.

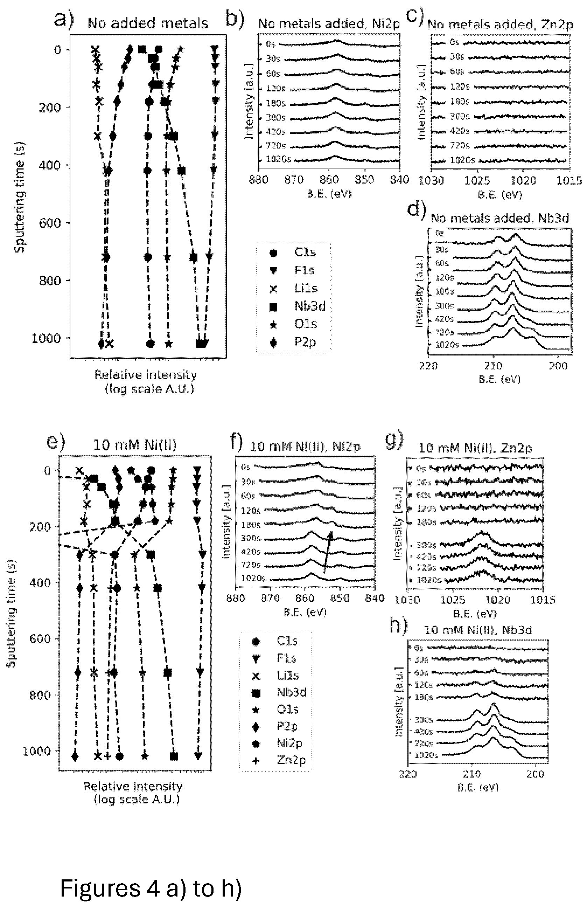

Figs. 4 a) to h) are diagrams showing XPS depth profiles for MNO electrodes harvested from cells cycled with metal-free or Ni(II)-containing electrolyte.

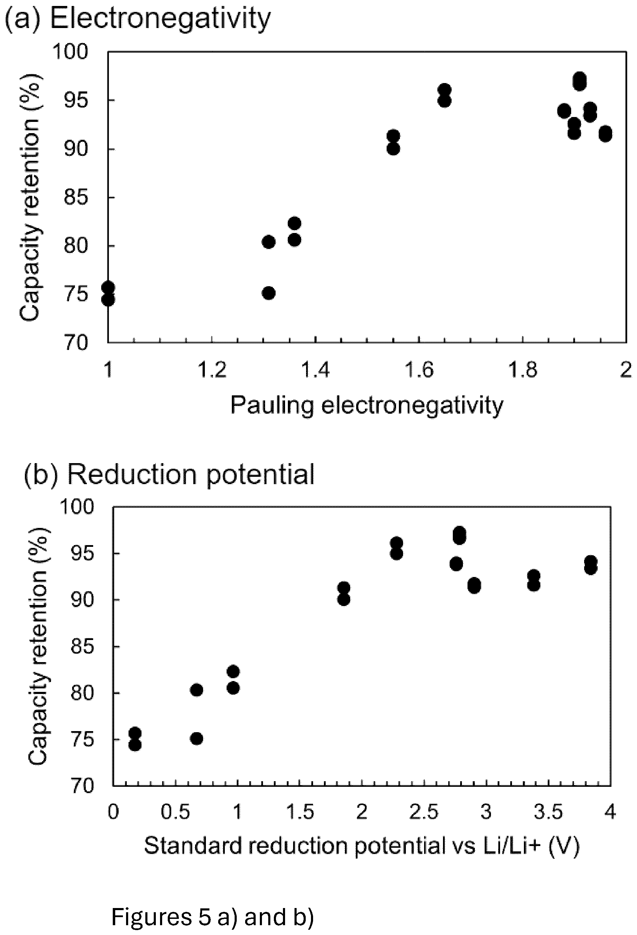

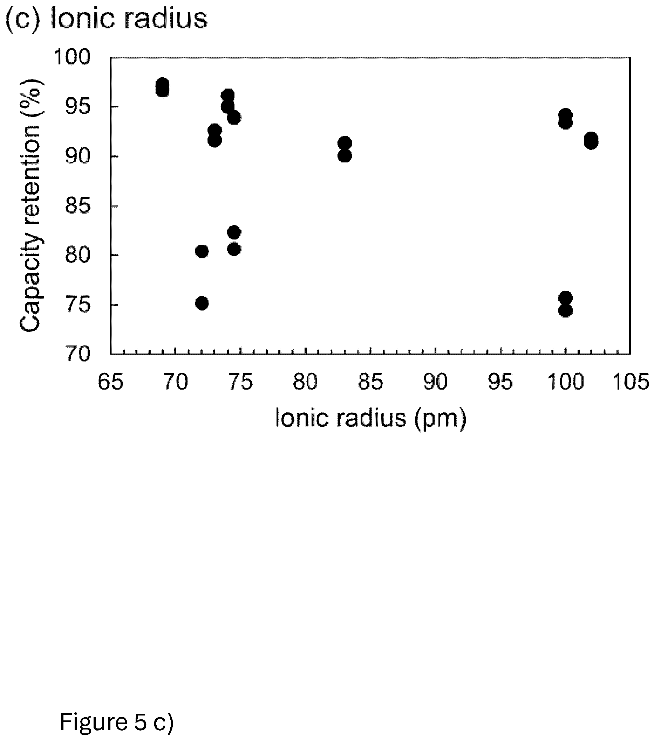

Figs. 5 a) and b) are diagrams showing capacity retention of LNMO-MNO 3-electrode PAT-format lithium-ion cells after 53 cycles and the properties of the metal additives used in those cells. Electrolyte solution contains 10 mM Ni(II), Mg(II), Zn(II), Mn(II), Co(II), Ag(I), Cu(II), Sn(II), Sc(III), or Ca(II) TFSI.

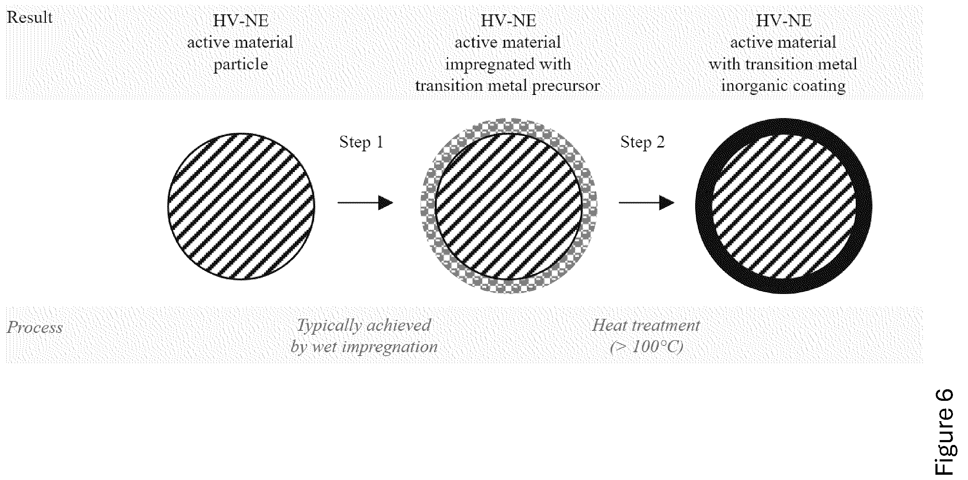

Fig. 6 is an illustration of active material coating process. Coating of active materials (striped sphere) for both positive and negative electrodes are typically achieved by a two-step process involving 1) a wet impregnation of the powdered material with a suitable precursor (e.g. a transition metal salt solution) and 2) a heat treatment at temperatures higher than 100 °C of the impregnated powder to transform the dried surface layer (dotted pattern) to an inorganic coating (black) that is chemically bound to the active material.

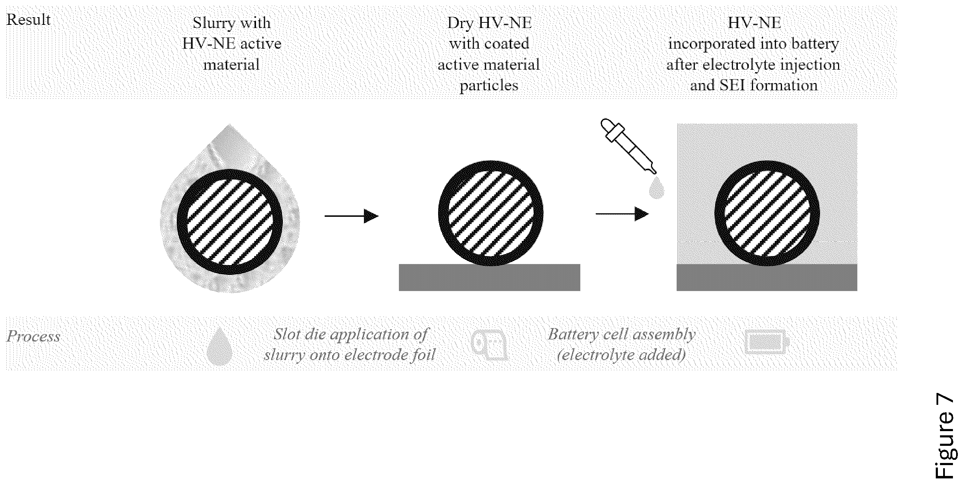

Fig. 7 is an illustration of the SEI formed on a HV-NE incorporating active material particles with an inorganic coating. To make the electrode on which the SEI is formed, the coated active material powder is first dispersed in a slurry with other constituents (not shown) and applied uniformly onto an electrode foil. The slurry on the foil is dried to form an electrode with coated active material particles. The electrode is then used for the assembly of a battery cell (not shown) and electrolyte is added.

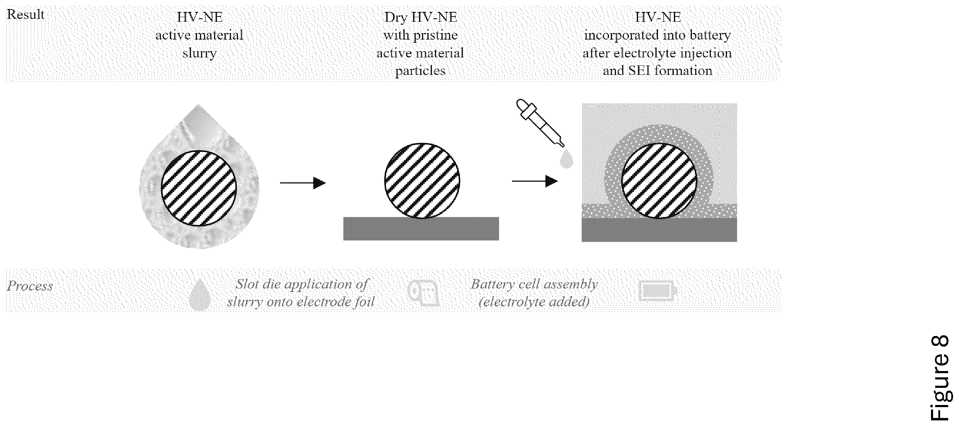

Fig. 8 is an illustration of the SEI formed on a HV-NE incorporating active material particles without any inorganic coating. To make the electrode on which the SEI is formed, the pristine active material particles (striped sphere) without inorganic coating is first dispersed in a slurry with other constituents (not shown) and applied uniformly onto an electrode foil. The slurry on the foil is dried to form an electrode with active material particles. The electrode is then used for the assembly of a battery cell (not shown) and electrolyte is added. The SEI (dark dotted grey layer) is formed during a process of charge and discharge operations and covers the electrode foil as well as the active material particle .

### Verification of the invention

The invention will be described in further detail and verified by way of a series of comparison tests using pairs of two identical test cells except for one test cell of the pair was added an amount of a selection of one or more cation(s) and the other was not given an addition of one or more of said cation(s).

All comparison tests were made with two or three-electrode lithium ion electrochemical test cells commercially available from EL-Cell GmbH in Hamburg, Germany, under the trade names "PAT-Cell" or "PAT-Cell-Press". Each test cell had:
- a 17 mm lithium-nickel-manganese oxide (LNMO) positive electrode commercially available from Haldor Topsoe A/S, Kgs. Lyngby, Denmark with a loading of ~19 mg/cm² loading and 97 wt% of the mixed oxide; LiₓM_{y}Mn_{2-y}O₄₋ᵥ(SO₄)_{z}, as the active material,
- a 17 mm mixed niobium oxide (MNO) high-voltage negative electrode commercially available from Echion Technologies, Cambridge, England, under the trademark XNO^{®} having a loading of ~16 mg/cm² and 95 wt% active material,

- a separator commercially available from EL-Cell GmbH in Hamburg, Germany under the trade name Freudenberg FS-5P separator, and
- a stainless-steel upper plunger, and an aluminium lower plunger (height number 200).

Where a 3-electrode configuration test cell was used, the reference electrode was a lithium metal ring fitted in the separator sleeve on the outside of the electrode stack. All test cells used 120 µL of electrolyte which comprised a 1 M LiPF₆ salt in a solvent system of cyclic and linear carbonates, a typical representation of lithium-ion battery electrolytes. This cell chemistry is referred to hereinafter as "LNMO-MNO cells".

The test cells were cycled between 2.5-3.5 V; the formation protocol consisted of 2 C/10 CC cycles followed by 1 C/10 CCCV cycle while the cycling protocol consisted of 50 C/2 CCCV cycles followed by two C/10 CCCV cycles. Following both formation and cycling, electrochemical impedance measurements were performed (ten frequencies per decade, 100 kHz to 0.01 Hz, 10 mV signal amplitude) then cells were left at open-circuit potential for 12 hours.

### Example 1 - comparison of capacity retention

In this example, a series of test cells, each test cell made to contain a 10 millimolar solution of one of the cations: Ni(II), Mg(II), Zn(II), Mn(II), Co(II), Ag(I), Cu(II), Sn(II), Sc(III), or Ca(II) by addition of a dried TFSI-salt of these cations were compared toward reference cells having no added cation and exposed to the cycling described above.

Figure 1 shows capacity retention data for LNMO-MNO cells containing no added metals or containing 10 mM Ni(II), Mg(II), Zn(II), Mn(II), Co(II), Ag(I), Cu(II), Sn(II), Sc(III), or Ca(II) TFSI added to the electrolyte solution.

As seen from figures 1a) to 1d), the capacity retention is clearly improved in cells containing added Ni(II), Zn(II), Mn(II), Co(II), Ag(I), Cu(II), Sn(II), while appears slightly improved with added Sc(III), and clearly worsened with added Mg(II) or Ca(II). (Note in Figure 1d, some data are missing for cycles 27-31; cells were cycled correctly but data were not captured for all cells due to a software error.)

### Example 2 - comparison of other performance markers

Cells which showed changed capacity retention in example 1 were further checked for other performance markers including higher coulombic efficiency, a lower capacity share from the constant voltage cycling step, lower cell voltage increases at rest after cycling, and less rise in the LNMO and MNO electrode potentials during cycling.

The results are shown in Figures 2 a) to d) for the Ni/Zn/Mg dataset (where Ni(II) and Zn(II) improve other cell parameters besides retention, and Mg worsens other cell parameters besides retention). The improvement of additional cell metrics is also true for the other beneficial additives tested (Mn(II), Co(II), Sn(II), Cu(II), Ag(I)). Impedance at MNO is also lower for cells with added Ni and Zn, although this has not been analysed for all the different metals tested. The mitigation of the rise of LNMO electrode potential during cycling (Figure 2e,f) suggests that less cyclable lithium is lost through side reactions at the negative electrode surface, which may explain the increased capacity retention when the beneficial metal salts are employed.

Measurements with added Ni and Mn (Figure 1b) were performed with PAT Press cells. The normalised pressure measurements from these cells are shown in Table 1. Irreversible pressure increases in cells generally arise from the generation of undesirable gaseous reaction products; hence, this cell format is designed to assess the extent of gassing in cells. The cells with added Ni and Mn demonstrate less pressure generation after the formation method (first 3 C/10 cycles), less pressure generation after the cycling method (50 C/2 cycles and 2 C/10 cycles), and thus less pressure generation (i.e., less gassing) overall.

**Table 1. Relative pressure data for LNMO-MNO 3-electrode PAT Press-format lithium-ion cells; electrolyte solution either has no added metals or contains 10 mM Ni(II) or Mn(II) TFSI. Data in each column are normalised to the value for the cells with no added metals. Error values indicate the range between two duplicate cells.**

| | Relative pressure difference after formation (arb. units) | Relative pressure difference after cycling (arb. units) | Relative pressure difference after formation + cycling (arb. units) |
|---|---|---|---|
| No added metals | 1.00 ± 0.03 | 1.00 ± 0.06 | 1.00 ± 0.03 |
| 10 mM Ni(TFSI)₂ | 0.74 ± 0.08 | 0.62 ± 0.18 | 0.67 ± 0.14 |
| 10 mM Mn(TFSI)₂ | 0.57 ± 0.02 | 0.70 ± 0.05 | 0.65 ± 0.04 |

### Example 3 - investigation of mechanism

The mechanism of action for Ni(II) and Zn(II) was explored with an experiment in which electrodes were exchanged, which is now described. Cells were formed (cycled 3 times at C/10 rate) with either Ni(II), Zn(II), or no added metals in the electrolyte; these cells did not contain the usual lithium reference, to eliminate the possibility that the metals deposited on the lithium reference.

After formation, cells were disassembled in an argon glovebox and electrodes were rinsed in ethyl methyl carbonate solvent for 2+ minutes to remove traces of the original electrolyte solution. Electrodes were dried overnight, then formed into three-electrode cells with fresh electrolyte that did not contain any added metal salts. Electrodes were formed into new cells in four combinations: cells where MNO and LNMO had both been exposed to Ni(II) or Zn(II); cells where neither MNO nor LNMO had been exposed to added metals; cells where only LNMO had been exposed to Ni(II) or Zn(II); and cells where only MNO had been exposed to Ni(II) or Zn(II).

Results in Figure 3a show that cells where both electrodes had been exposed to Ni(II) performed similarly well to cells where only MNO had been exposed to Ni(II), while cells where neither electrode had been exposed to Ni(II) performed similarly poorly to cells where only LNMO had been exposed to Ni(II). Results in Figure 3b show the same result achieved for cells with Zn(II). This indicates that the beneficial action of the added transition metals is achieved not at LNMO, not within the electrolyte solution, and not at the lithium reference electrode, but rather at the MNO electrode.

Figure 4 shows X-ray photoelectron spectroscopy (XPS) depth profiles for MNO electrodes harvested from postmortem cells that used metal-free or Ni(TFSI)₂-containing electrolyte. Electrodes were not rinsed before XPS, due to concerns around the solubility of surface species. Electrodes were transferred from an argon glovebox to the XPS instrument via an airless transfer chamber. The samples were mounted with C-tape on glass insulation and transferred inert before measurement with a Thermo Thetaprobe using monochromated Al Kα radiation (1486.6 eV), using an accelerating voltage of 15kV and a pass energy of 40 eV. The diameter of the irradiated area was 400 µm.

Depth profiling was done by Ar sputtering (500 V) with measurements performed at 0 s, 30 s, 60 s, 120 s, 180 s, 300 s, 420 s, 720 s and 1020 s. The figure shows integrated peak intensity, which means comparison within element (between the different depths and samples) is possible, but it does not give the atomic ratio of elements. The elemental composition of the baseline sample shows an increase in the Nb signal as sputtering gradually removes the surface (Figure 4a, 4d), which indicates a partially covering (Nb-poor) SEI. The SEI has an inorganic inner layer, with LiF detected at a constant ratio through the sample, but an outer layer with a higher concentration of O, P, F, and C on the surface (Figure 4a). No Ni was detected.

By contrast, the sample with Ni(TFSI)₂ shows no Nb on the surface and almost no increase in the first five depths probed (Figure 4e, 4h), demonstrating a covering SEI. Ni is detected and increases towards the innermost SEI-layer (Figure 4e, 4f). The ratio shifts significantly on the 6^{th} measurement point, where Nb and LiF become the main components, and no further Ni is detected. Note that the Ni2p peak overlaps with the F KLL peaks (850 and 857 eV), so the clearest Ni signal is indicated by an arrow. The composition of the rest of the SEI is O, P, F and C, as for the baseline. The XPS results clearly indicate that the Ni(II) additive results in the formation of a protective SEI-layer on the MNO surface that is not present when no metals are added. This SEI-layer is also clearly protective for the MNO material. In the sample with no metal added, no signal can be observed for one of the elements (Zn) in the niobate (Figure 4c). The sample with Ni(II) added, has a clear Zn peak from the 6^{th} measurement point (Figure 4e, 4g), which is where Nb and LiF are the main components and the outer SEI-layer ends. This demonstrates that MNO is damaged by cycling, but the SEI-layer limits the degradation.

Figure 5 shows that there is a clear correlation with the electronegativity¹⁶ and reduction potential¹⁶ of the metals (two properties closely linked), although there is no correlation with the ionic radius.¹⁷ (We note that the radius shown for Sn(II) is 102 pm,¹⁸ although the ionic radius for Sn(II) varies significantly¹⁷ between compounds.) The correlation with electronegativity/reduction potential but not ionic radius further supports the data in Figures 3 and 4, showing that the metal ions participate in the formation of passivating SEI-type species at the negative electrode surface.

In particular, the experiments above indicate that the additives are acting by forming an SEI-layer on the surface of the MNO material, as opposed to modifying the active material (as a dopant or substituent of the MNO active material) or depositing as one uniform chemical compound on the surface (as a coating).

The active material is shown not to be doped by the metal cations based on the results in Figures 4 and 5. The XPS results in Figures 4 e) to 4 h) show that the Ni is present on the surface of the MNO, with the Nb and Zn signals increasing in intensity (300 s) only after the Ni signal has ended (180 s), indicating that Ni is not doping MNO. Furthermore, Figure 5c shows there is no correlation between the ionic radius of the cations and the performance of the cells. If the cations were inserting into the crystal structure of the MNO material, it is expected that there would be a correlation with the size of the cation, because stable defects are generally size-dependent.

Figure 6 demonstrates the process to form a coating, while Figures 7 and 8 demonstrate the distinction between an ex-situ coating versus in situ SEI formation. The cationic additives are not producing the same result as a coating would because the additives are interacting with the components of the electrolyte solution to create the SEI-layer. In the case of a coating, one would see a layer of uniform thickness and distinct chemical composition (e.g., Al₂O₃), which is generally unchanged when the cell is cycled with different electrolyte solutions. By contrast, the SEI-layer formed in situ from reactions between the metal cation and the electrolyte solvents and/or salts comprises several chemical components.

The XPS results in Figure 4 e) show that the SEI in the Ni-containing sample comprises numerous species, incorporating elements including C, P, F, O, Li, and Ni, rather than a uniform single chemical coating. Furthermore, as ex situ coatings are employed before the cell is assembled, there are no self-healing properties, whereas the SEI formed in situ may be able to continually repair itself, particularly if an excess of metal cations is present. Similarly, an ex-situ coating cannot then vary with variation in the cycling conditions of the cell, whereas an in situ SEI may vary with factors including temperature, voltage window, and cycling rate, as harsher conditions may drive the formation of a thicker SEI, while the coating is a consistent, predetermined thickness. Lastly, ex situ coating of electrode materials is almost always performed at the active material particle level, whereas an SEI generated in situ can be formed over the entire electrode surface, including all components of the electrode (binders, conductive additives, etc.).

Based on the above experimental data, a LIB according to the present invention can be provided by adding the metal salts to the negative electrode slurry directly. The concept here should be that said cations are then incorporated in close proximity to their destination inside the battery. By adding the metal salt directly to the slurry, dissolving the additive in the electrolyte before injection into a battery is avoided, which is preferable in case the preformulated electrolyte solution is not as stable as if the additives are incorporated directly into the electrode.

### References

1 Haregewoin, A. M.; Wotango, A. S.; Hwang, B.-J. Electrolyte Additives for Lithium Ion Battery Electrodes: Progress and Perspectives. Energy Environ. Sci. 2016, 9 (6), 1955-1988.
2 Zhan, C.; Wu, T.; Lu, J.; Amine, K. Dissolution, Migration, and Deposition of Transition Metal Ions in Li-Ion Batteries Exemplified by Mn-Based Cathodes - a Critical Review. Energy Environ. Sci. 2018, 11 (2), 243-257.
3 Zhan, C. et al., "Mn(II) deposition on anodes and its effects on capacity fade in spinel lithium manganate-carbon systems". Nat. Commun. 4:2437 doi: 10.1038/ncomms3437 (2013).
4 Chen, H. et al., "Quantification on Growing Mass of Solid Electrolyte Interphase and Deposited Mn(II) on the Silicon Anode of LiMn2O4 Full Lithium-Ion Cells", ACS Appl. Mater. Interfaces (2019), 11, 27839-27845
5 Ding, H. et al., "Niobium-based oxide anodes toward fast and safe energy storage: a review", Materials Today Nano 11 (2020) 100082 http s: //doi .org/10.1016/j .mtnano.2020.100082
6 Zheng, H. et al., "Potassium Salts Electrolyte Additives for Enhancing Electrochemical Performances of Natural Graphite Anodes", Electrochemical and Solid-State Letters, (2006), 9 (3) A115-A119 DOI: 10.1149/1.2161447
7 S. Komaba, T. Itabashi, T. Kimura, H. Groult, N. Kumagai,"Opposite influences of K+ versus Na+ ions as electrolyte additives on graphite electrode performance", Journal of Power Sources, Volume 146, Issues 1-2, 2005, Pages 166-170.
8 Wu, M.-S. et al. (2004), "A Silver Hexafluorophosphate Additive to Propylene Carbonate-Based Electrolytes for Lithium-Ion Batteries", Electrochem. Solid-State Lett. 7, A206.
9 Wu, M.-S. et al. (2004), "Effects of copper trifluoromethanesulphonate as an additive to propylene carbonate-based electrolyte for lithium-ion batteries", Electrochimica Acta, Volume 49, Issue 25, Pages 4379-4386.
10 Jung, R. et al., "Nickel, Manganese, and Cobalt Dissolution from Ni-Rich NMC and Their Effects on NMC622-Graphite Cells ", Journal of The Electrochemical Society, 166 (2) A378-A389 (2019) DOI: 10.1149/2.1151902jes
11 Solchenbach, S.; Hong, G.; Freiberg, A. T. S.; Jung, R.; Gasteiger, H. A. "Electrolyte and SEI Decomposition Reactions of Transition Metal Ions Investigated by On-Line Electrochemical Mass Spectrometry", J. Electrochem. Soc., 2018, 165 (14), A3304.
12 Gilbert, J. A.et al., "Transition Metal Dissolution, Ion Migration, Electrocatalytic Reduction and Capacity Loss in Lithium-Ion Full Cells", J. Electrochem. Soc. 2017, 164 (2), A389.
13 Nordh, T. et al.m "Manganese in the SEI-layer of Li4Ti5O12 Studied by Combined NEXAFS and HAXPES Techniques", J. Phys. Chem. C (2016), 120 (6), 3206-3213.
14 Nordh, T. et al. "Depth Profiling the Solid Electrolyte Interphase on Lithium Titanate (Li4Ti5O12) Using Synchrotron-Based Photoelectron Spectroscopy", J. Power Sources (2015), 294, 173-179.
15 Hossain, H. et al., "Advances of lithium-ion batteries anode materials - A review", Chemical Engineering Journal Advances, 16 (2023), 100569 https://doi.org/10.1016/j .cej a.2023.100569
16 CRC Handbook of Chemistry and Physics, 97th Edition.; Haynes, W. M., Lide, D. R., Bruno, T. J., Eds.; CRC Press: Boca Raton, 2016.
17 Shannon, R. D., "Revised Effective Ionic Radii and Systematic Studies of Interatomic Distances in Halides and Chalcogenides", Acta Crystallogr. Sect. A, (1976), 32 (5), 751-767.
18 Sidey, V., "On the Effective Ionic Radii for the Tin(II) Cation", J. Phys. Chem. Solids, (2022), 171, 11099.

## Claims

1. A lithium-ion electrochemical cell (LIB) comprising:
- a positive electrode,
- a high-voltage negative electrode (HV-NE), and
- an electrolyte,
**characterised in that** the LIB further comprises an added amount of a selection of one or more cation(s), wherein each cation of the selection is a cation of an element chosen from:
i) the group of elements in groups 3 to 12 and periods 4 to 6, including the lanthanides of the IUPAC Periodic Table of the elements of 4^{th} May 2022, and/or
ii) the group of; Al, Ga, In, Ge, Sn, Pb, Sb and Bi.

2. The LIB according to claim 1, wherein each of the one or more cation(s) of the selection is a cation of an element chosen from:
either
a group of elements consisting of: Au, Ag, Al, Bi, Co, Cr, Cu, Fe, Ga, In, Mn, Mo, Nb, Ni, Pd, Pt, Sn, Ti, V, W, and Zn,
or
a group of elements consisting of: Au, Ag, Al, Bi, Co, Cr, Cu, Fe, Ga, In, Mn, Ni, Pd, Pt, Sn, and Zn,
or
a group of elements consisting of: Ag, Co, Cu, Mn, Ni, Sn, and Zn,
or
group of elements consisting of: Cu, Mn, Ni, Sn, and Zn,
or
a group of elements consisting of: Cu, Sn, Ni, and Zn.

3. The LIB according to claim 1 or 2, wherein each cation in the selection of one or more cation(s) is in the form of:
- an organic compound of the cation, and/or
- an inorganic compound of the cation, and/or
- a solution containing the cation.

4. The LIB according to claim 3, wherein each cation in the selection of one or more cation(s) is in the form of a salt of a bis(trifluoromethanesulphonyl)imide (TFSI), a bis(fluorosulfonyl)imide (FSI), a trifluoromethanesulfonate (OTf), a bis(oxalato)borate (BOB), a perchlorate (ClO₄), a tetrafluoroborate (BF₄), a hexafluorophosphate (PF₆), and/or a Tetrakis(3,5-bis(trifluoromethyl)phenyl)borate (TFPB).

5. The LIB according to any preceding claim, wherein the total amount of cations of the selection of chosen cation(s) added to the LIB, expressed as a concentration of added cations in a homogenized electrolyte, when:
- the amount of electrolyte present in the LIB is the amount of electrolyte before the LIB undergoes a first charging/discharging cycle,
- all of said addition is present in the electrolyte, and
- all of said addition solves 100 % in the electrolyte,
is in the range from 1 to 200 millimoles per L electrolyte.

6. The LIB according to claim 5, wherein the total amount of cations of the selection of chosen cation(s) added to the LIB is
of from 2 to 175 millimoles per L electrolyte,
or from 5 to 125 millimoles per L electrolyte,
or from 7 to 130 millimoles per L electrolyte,
or from 9 to 80 millimoles per L electrolyte,
or from 10 to 70 millimoles per L electrolyte,
or from 12 to 50 millimoles per L electrolyte,
or from 15 to 40 millimoles per L electrolyte,
or from 20 to 30 millimoles per L electrolyte.

7. The LIB according to any of the preceding claims, wherein the HV-NE has an active material with an average potential versus Li/Li⁺ in the range from 0.5 to 3.0 V, or from 0.6 to 2.8 V, or from 0.7 to 2.6 V, or from 0.8 to 2.4 V, or from 0.9 to 2.3 V, or from 1.0 to 2.2 V, or from 1.1 to 2.1 V, or from 1.2 to 2.0 V, or from 1.3 to 1.9 V, and or from 1.4 to 1.8 V, or from 1.5 to 1.7 V.

8. The LIB according to any preceding claim, wherein the HV-NE has an active material selected from the group consisting of lithium titanium oxides (lithium titanates), niobium oxides (niobates), niobium tungsten oxides, titanium oxides, other transition metal oxides such as manganese, nickel, iron, zinc, and/or transition metal phosphides.

9. The LIB according to claim 8, wherein the HV-NE has an active material chosen from one or more of: Li₄Ti₅O₁₂, Nb₂O₅, Nb₁₆W₅O₅₅, Nb₁₈W₁₆O₉₃, FeP, TiO₂, Cu₂Nb₃₄O₈₇, AlNb₁₁O₂₉, TiNb₂O₇, VNb₉O₂₅, MnO, NiO, Fe₃O₄, ZnMn₂O₄, ZnFe₂O₄, CoMoO₄, Li₃Ti₄Co_{0.95}CrO₁₂, Zn₂Ti₃O₈₋ₓ, Na₂Li₂Ti₆O₁₄, Cu_{0.02}Ti_{0.94}Nb_{2.04}O₇, or Li₃VO₄.

10. The LIB according to any preceding claim, wherein the positive electrode of the LIB comprises an active material selected from one or more of lithium transition metal oxides and lithium phosphates.

11. The LIB according to claim 10, wherein the positive electrode of the LIB comprises an active material chosen from one or more of stoichiometric or lithium-rich LiMn₂O₄, LiNiₓMn₂₋ₓO₄, LiCoO₂, LiNiO₂, LiNiₓMn_{y}Co_{1-x-y}O₂, LiNiₓCo_{y}Al_{1-x-y}O₂, LiFePO₄, and LiMnₓFe₁₋ₓPO₄.

12. The LIB according to any preceding claim, wherein the electrolyte comprises one or more organic electrolyte solvent selected from the group consisting of carbonates, ethers, esters, lactones, sulfones, sulfonates, nitriles, phosphates, ionic liquids, formates, amides, imides, sulfoxides, ketones, and amines.

13. The LIB according to claim 12, wherein the electrolyte comprises one or more compound(s) selected from the group consisting of ethylene carbonate, propylene carbonate, fluoroethylene carbonate, difluoroethylene carbonate, diethyl carbonate, ethyl methyl carbonate, and/or dimethyl carbonate, any combination of diethyl carbonate, and dimethyl carbonate, lithium hexafluorophosphate (LiPF₆), lithium tetrafluoroborate (LiBF₄), lithium bis(oxalato)borate (LiBOB), lithium difluoro(oxalato)borate (LiDFOB), lithium perchlorate (LiClO₄), lithium bis(fluorosulfonyl)imide (LiFSI), lithium difluorophosphate (LiPO₂F₂), lithium trifluoromethanesulfonate (LiOTf) and lithium bis(trifluoromethanesulfonyl)imide (LiTFSI).

14. A method for enhancing performance metrics of a lithium-ion electrochemical cell (LIB), wherein the LIB comprises:
- a positive electrode,
- a high-voltage negative electrode (HV-NE), and
- an electrolyte,
**characterised in that** the method comprises adding an amount of a selection of one or more cation(s), wherein each cation of the selection is a cation of an element chosen from:
either
- a group of elements in groups 3 to 12 and periods 4 to 6, including the lanthanides of the IUPAC Periodic Table of the elements of 4^{th} May 2022, and
- a group of; Al, Ga, In, Ge, Sn, Pb, Sb and Bi,
or
- the group of elements in groups 3 to 12 and periods 4 to 6, including the lanthanides of the IUPAC Periodic Table of the elements of 4^{th} May 2022,
or
- the group of; Al, Ga, In, Ge, Sn, Pb, Sb and Bi,
or
- a group of; Au, Ag, Al, Bi, Co, Cr, Cu, Fe, Ga, In, Mn, Mo, Nb, Ni, Pd, Pt, Sn, Ti, V, W, and Zn,
or
- a group of: Au, Ag, Al, Bi, Co, Cr, Cu, Fe, Ga, In, Mn, Ni, Pd, Pt, Sn, and Zn,
or
- a group of elements consisting of: Ag, Co, Cu, Mn, Ni, Sn, and Zn,
or
- a group of elements consisting of: Cu, Mn, Ni, Sn, and Zn,
or
- a group of elements consisting of: Cu, Sn, Ni, and Zn.

15. The method according to claim 14, wherein the method further comprising adding each of the cation(s) of the selection to the:
- the HV-NE, and/or
- the electrolyte, and/or
- the positive electrode of the LIB,
and wherein each of the cation(s) of said selection is added in the form of:
- an organic compound of the cation, and/or
- an inorganic compound of the cation, and/or
- a solution containing the cation.

16. The method according to claim 14 or 15, wherein the addition of the selection of cation(s) to the LIB is made before the LIB undergoes a first charging/- discharging cycle.

17. Use of a selection of one or more cation(s) as defined in any of claims 1 to 14 as an additive to lithium-ion electrochemical cells having a high-voltage negative electrode.
